# EUROPÄISCHE PATENTSCHRIFT

(11) **EP 2 907 984 B1**
(45) Veröffentlichungstag und Bekanntmachung des Hinweises auf die Patenterteilung: **03.05.2017**
(21) Anmeldenummer: 15000199.8
(22) Anmeldetag: 23.01.2015
(51) Int. Cl.: F01N 3/10, F01N 3/20, F01N 3/035, F01N 13/00, F01N 13/10

(54) **Brennkraftmaschine**
Internal combustion engine
Moteur à combustion interne

(30) Priorität: 14.02.2014 DE 102014001879
(43) Veröffentlichungstag der Anmeldung: 19.08.2015
(73) Patentinhaber: DEUTZ Aktiengesellschaft, 51149 Köln (DE)
(72) Erfinder: Roos, Meike, 63654 Büdingen (DE); Klein, Ulf, 53804 Much (DE); Leyh, Gerald, 51149 Köln (DE)

(56) Entgegenhaltungen:
- WO-A1-2008/020207
- WO-A1-2012/107637
- WO-A1-2013/185862
- DE-A1-102008 038 984
- DE-A1-102009 011 019
- JP-A- 2014 015 874

## Beschreibung

Die Erfindung betrifft eine Brennkraftmaschine. Derartige Brennkraftmaschinen sind beispielsweise bekannt aus der DE 103 48 800, die ein Verfahren für die Steuerung eines Reduktantzuführsystems mit mindestens einem Heizelement offenbart. Das Zuführsystem ist stromauf mit einem SCR-Katalysator verbunden. Bei der luftunterstützten Einspritzung des Reduktants in das Zuführsystem wird über das beheizte Element eine verdampfte Mischung aus Luft und dem Reduktant gebildet, die in eine in den SCR-Katalysator eintretende Abgasmischung eingeleitet wird. Als Reduktant wird wässrige Harnstofflösung verwendet. Das gesamte Zuführsystem einschließlich Mischeinheit für HWL und Luft und Heizelement / Verdampfereinheit ist abströmseitig zum SCR-Katalysator in das Abgas führende Rohr abströmseitig zum Motoraustritt integriert. Die zur Verdampfung des HWL-Luft-Gemisches notwendige Wärmemenge wird elektrisch unter Zuhilfenahme des 12-V-Batteriestroms erzeugt.

DE 10 2007 029 674 offenbart eine Baugruppe zur Stickoxidminderung in einer sauerstoffhaltigen Gasströmung, insbesondere einer Abgasanlage einer Verbrennungskraftmaschine, mit einem in einer Stickoxide und Sauerstoff führenden Gasleitung angeordneten SCR-Katalysator, einem Umsetzungsreaktor, der eine eine Ammoniakvorstufe enthaltende Lösung in eine Ammoniaklösung umsetzt, und einer dem Umsetzungsreaktor nachgeschalteten, als separates Bauteil ausgebildeten Verdampfungseinheit, in der die Ammoniaklösung vor Einbringung in die Gasleitung stromaufwärts des SCR-Katalysators verdampft wird. Die Umsetzung der eine Ammoniakvorstufe enthaltenden Lösung (bevorzugt Harnstoffwasserlösung) in eine Ammoniaklösung erfolgt erfindungsgemäß unter Verwendung von Mikrowellen. Vor der als separates Bauteil ausgeführten Verdampfungseinheit für Ammoniaklösung kann ein Wärmetauscher zur Erwärmung der Ammoniaklösung vorgeschaltet sein, um die zur Verdampfung notwendige Energie zu verringern, indem beispielsweise die Wärme der Abgasrückführleitung genutzt wird. Bei dem Verdampfer selbst handelt es sich um ein elektrisch betriebenes Heizelement.

DE 10 2007 042 836 offenbart eine Vorrichtung zur Abgasnachbehandlung eines Kraftfahrzeuges mittels einer Ammoniak freisetzenden Flüssigkeit, beispielsweise Harnstoffwasserlösung, umfassend einen Vorratsbehälter zur Speicherung der Flüssigkeit, wobei eine Temperiervorrichtung zum Temperieren der Flüssigkeit vorgesehen ist. Die Temperiervorrichtung ist zur Kühlung der Flüssigkeit einem Kühlkreislauf des Kraftfahrzeuges zugeordnet. Dabei kann es sich um den Kühlkreislauf des Verbrennungsmotors oder um einen Klimaanlagenkreislauf handeln. Die Temperiervorrichtung ist als separates Bauteil ausgeführt. Mittels Temperiervorrichtung kann die Flüssigkeit erwärmt und ihr Einfrieren verhindert werden oder die Flüssigkeit auf ein vorteilhaftes Temperaturniveau erwärmt werden, bei dem sich eine besonders gute Abgasreinigung ergibt.

DE 10 2009 009 538 offenbart ein System zum Temperieren eines fluiden Additivs für ein Abgassystem eines Verbrennungsmotors, vorzugsweise Harnstoffwasserlösung, das gekennzeichnet ist durch Mittel für einen Wärmeaustausch zwischen dem Additiv und einem Kältemittelkreislauf einer Kältemittelanlage, insbesondere einer Klimaanlage.

Der in der DE 10 2007 011 184 beschriebenen Entwicklung liegt die Aufgabe zugrunde, den Emissionsgehalt von Verbrennungsmotoren, insbesondere Dieselmotoren, weiter zu senken und den Bauraum, der zur Behandlung des Abgases notwendig ist, zu minimieren. Zur Lösung dieser Aufgabe wird ein Wärmetauscher zur Kühlung von Abgas eines Verbrennungsmotors eines Kraftfahrzeugs zur Rückführung von Abgas zum Verbrennungsmotor offenbart. Dieser Wärmetauscher weist zumindest einen ersten Strömungskanal zur Durchströmung mit zumindest einem ersten Fluid zur Kühlung und zumindest einen zweiten Strömungskanal zur Durchströmung mit einem zweiten zu kühlenden Fluid auf, sowie ein Gehäuse zur Aufnahme des zumindest einen ersten Strömungskanals und des zumindest einen zweiten Strömungskanals. Das Gehäuse weist zumindest einen Einströmabschnitt zur Einströmung des zweiten Fluids in den Wärmetauscher und zumindest einen Abströmabschnitt zum Ausströmen des zweiten Fluids aus dem Wärmetauscher auf. Der Wärmetauscher ist durch zumindest eine Vorrichtung zur Überführung einer flüssigen Harnstofflösung in zumindest Ammoniakgas gekennzeichnet.

WO 2012/022687 offenbart ein Verfahren zum Betrieb einer Abgasnachbehandlungsvorrichtung mit zumindest einem Speicher für ein Reduktionsmittel und zumindest einer Zuführungseinrichtung für ein Reduktionsmittel, wobei das Verfahren zumindest die folgenden Schritte umfasst: a) Prüfen eines Füllstands des zumindest einen Speichers; b) Prüfen des aktuellen Abgasmassenstroms; c) Zuführen von Reduktionsmittel, wenn der Füllstand des zumindest einen Speichers unterhalb eines Füllstandsminimums liegt und der Abgasmassenstrom in einem Niedriglastbereich liegt. In einer besonderen Ausführungsform wird in Schritt c) zumindest eine der folgenden Aktionen durchgeführt: Heizen zumindest des Abgasmassenstroms oder des Reduktionsmittels und Zuführen von Reduktionsmittel. Dabei kann die Wärmezufuhr hin zum Reduktionsmittel durch externe elektrische Heizer gewährleistet bzw. verbessert werden.

Die WO 2012/107637 A1 offenbart einen Harnstoffwasserlösungs-Wärmetauscher im Auspuffkrümmer.

DE 10 2009 025 135 offenbart eine Vorrichtung zur Verdampfung einer Harnstoffwasserlösung, aufweisend einen Förderkanal für die Harnstoffwasserlösung, der sich durch zumindest eine erste Zone und eine zweite Zone zur Einbringung von Wärmeenergie hindurch erstreckt, wobei die zwei Zonen getrennt voneinander beheizbar sind, und der Förderkanal in der zweiten Zone zunächst in einem zweiten Eintrittsbereich einen mäanderförmigen Verlauf und danach einen geradlinigen Verlauf ausweist. In der ersten Zone wird die Harnstoffwasserlösung auf eine Temperatur im Bereich von 100°C bis 180°C vorgewärmt, in der zweiten Zone bei einer Temperatur von 420°C bis 490°C verdampft.

DE 10 2008 012 087 offenbart eine Verdampfungseinheit zur Erzeugung eines Ammoniak umfassenden Gasstroms aus Harnstoffwasserlösung, die ebenfalls als separates Bauteil ausgeführt wird.

Industriemotoren nach dem Stand der Technik werden typischerweise mit katalytisch wirksamen ANB-Systemen gemäß der EP-B 1 054 722 (sog. "SCRT^{®}-Systeme", bestehend aus DOC/(c)DPF + SCR/ASC mit Eindosierung von Harnstoffwasserlösung (HWL) vor dem SCR/ASC-Katalysator) betrieben, um die geltenden Emissionsvorschriften (Tier4 final / EU Stufe IV und nachfolgende) einzuhalten.

Damit das ANB-System mit der geforderten Reinigungseffizienz arbeiten kann, sind Mindestabgastemperaturen und Katalysatorbetriebstemperaturen von 230°C und mehr erforderlich.

In niedriglastigen Betriebszuständen können die geforderten Mindestabgastemperaturen nur mittels motorischen Wärmemaßnahmen (z. B. Androsselung des Motors) bereitgestellt werden. Die Energie, die zur Bereitstellung der notwendigen Abgastemperaturen in das Abgas eingetragen wird, ist für den Antriebsstrang verloren. Verminderte Antriebswirkungsgrade des Motors und erhöhte Kraftstoffverbräuche und somit auch erhöhte CO₂-Emissionen sind die Folge.

Einen besonders großen negativen Einfluss auf den Kraftstoffverbrauch hat die Regeneration des geschlossenen Dieselpartikelfilters. Zum kontrollierten Abbrand des im Filter eingelagerten Rußes sind Abgastemperaturen von rd. 600°C erforderlich. Um diese zu erreichen sind i.d.R. zusätzlich zur passiven Regeneration aktive Maßnahmen wie beispielsweise eine zusätzliche Kraftstoffnacheinspritzung und exotherme Umsetzung der resultierenden unverbrannten Kohlenwasserstoffe auf dem DOC oder aktive Regenerationsmaßnahmen beispielsweise mittels Kraftstoff betriebenem Brenner gemäß EP-A 2 177 728, EP-A 2 192 279 bzw. WO 2010/139429 notwendig.

Zum Betrieb des SCR-Systems wird als Reduktionsmittel typischerweise eine Harnstoffwasserlösung, die 32,5 % Harnstoff enthält, eingesetzt. Um daraus Ammoniak freizusetzen, muss also zunächst 67,5 % Wasser verdampft und der Harnstoff hydrolytisch zu Ammoniak und CO₂ zersetzt werden.

Bei heutigen SCR-Systemen wird die zur Erzeugung des Reduktionsmittels Ammoniak benötigte wässrige Harnstofflösung (Harnstoff-Wasser-Lösung HWL, auch AdBlue®) in flüssigem, untemperiertem Zustand anströmseitig zum SCR-Katalysator in das Abgas eingespritzt. Die Wärmemenge, die benötigt wird, um die HWL vollständig und unter (quantitativer) Freisetzung von Ammoniak in die Gasphase zu überführen (= Harnstoffaufbereitung), muss vollständig durch das heiße Abgas bereitgestellt werden.

Insbesondere in schwachlastigen Betriebspunkten ist die im Abgas vorhandene Wärmemenge jedoch häufig nicht ausreichend, um die eingespritzte HWL, die zur vollständigen Reduktion der ebenfalls im Abgas vorhandenen Stickoxide benötigt wird, vollständig aufzubereiten. Die Folge sind Ablagerungen von Harnstoff und Harnstoff-Folgeprodukten wie Isocyansäure, Cyanursäure und Melamin in der Abgasanlage (Kristallisation), die zur gegebenenfalls vollständigen Verblockung der Abgasanlage führen können, sowie Umsatzeinbußen in der SCR-Reaktion wegen der unvollständigen Bereitstellung der zur Stickoxidreduktion benötigten stöchiometrischen Menge an Ammoniak.

Es ist Aufgabe der vorliegenden Erfindung, durch eine geeignete Vorbehandlung der HWL die Aufbereitung und Hydrolyse des Harnstoffs zu Ammoniak soweit zu verbessern, dass auch in schwachlastigen Betriebspunkten eine ausreichende Ammoniakerzeugung zur Gewährleistung des vollständigen SCR-Umsatzes ohne störende Kristallisation möglich wird.

Dabei ist die Einführung zusätzlicher, kostenintensiver Bauteile wie z. B Wärmetauscher, Heizvorrichtungen, Glühkerzen in die Abgasanlage bzw. in der Peripherie des Motors zu vermeiden.

Diese Aufgabe wird gelöst durch eine Brennkraftmaschine, wobei die Brennkraftmaschine wenigstens einen Abgasstrang umfasst mit wenigstens einer Abgasnachbehandlungsvorrichtung und wenigstens einem Harnstoff-Wasser-Lösungs-Tank (HWLT), sodass der HWLT motornah angeordnet ist.

Weiter wird die Aufgabe durch ein Verfahren zum Betrieb einer Vorrichtung gelöst.

Eine vorteilhafte Ausgestaltung sieht einen Industriemotor mit einem ANB-System aus DOC + SDPF + SCR/ASC vor, wobei statt einer Harnstoffwasserlösung-Einspritzung die Aufbereitung des Harnstoffs in einem am Motor angebrachten NH₃-Generator und Eindosierung von Ammoniak ins Abgas vor SDPF, ggf. zusätzlich vor SCR/ASC vorgesehen ist, sowie ein passives Regenerationskonzept für das SCR-katalytisch aktivierte Partikelfilter (SDPF). Eine zusätzliche Stillstandsregeneration des Partikelfilters erfolgt im Rahmen des Service, ebenso die Überwachung des Abgasgegendruckes über SDPF, um im Falle unzureichender Rußregenerationsraten außerhalb der Service-Intervalle "Not-Stillstandsregenerationen" durchführen zu können.

Durch die (Teil-)Integration von SCR-Katalysatorvolumen in das Partikelfilter ist eine Verkleinerung des ANB-Systems im Vergleich zu herkömmlichen Systemen möglich. Eine verbesserte Aufheizcharakteristik des ANB-Systems nach dem Kaltstart und deutlich geringere Wärmeverluste über die Abgasanlage sind die Folge. Es ergeben sich aber auch Bauraumvorteile. Der SCR-Katalysator nach dem Partikelfilter kommt wahlweise zum Einsatz und zwar dann, wenn das in das Partikelfilter integrierbare SCR-Volumen nicht ausreichend ist, um > 97 % NOₓ-Konvertierung des Gesamtsystems über die Laufzeit (8000 Betriebsstunden) zu gewährleisten.

Durch die Auslagerung der Harnstoffaufbereitung zu Ammoniak aus der Abgasanlage und die direkte Dosierung von Ammoniak in das ANB-System kann die Temperaturschwelle für die Eindosierung des Reduktionsmittels auf deutlich unter 200 - 230°C abgesenkt werden.

Die Limitierung der unteren Temperaturdosierschwelle liegt im Bereich des Arbeitstemperaturfensters des SCR-Katalysators. Es besteht kein Risiko der Kristallisation von Harnstoff und Harnstoff-Folgeprodukten wie Isocyansäure / Cyanursäure und Melamin, die aus dem unvollständigen Abbau von Harnstoff resultieren und zu einer vollständigen Verblockung der Abgasanlage bei zu geringen Betriebstemperaturen führen könnten. Es besteht auch keine Limitierung der Entstickungseffizienz durch unvollständige Harnstoffaufbereitung zu Ammoniak. Überdosierungen von Reduktionsmittel zur Kompensation einer unvollständigen Harnstoffaufbereitung in Niedriglastpunkten werden überflüssig. Eine Verkleinerung des ASC und/oder die vollständige Vermeidung der Ammoniaksekundäremission von (zulässigen) 10 Vppm im zeitlichen Mittel ohne ASC sind möglich.

Vorteilhafte Weiterbildungen befinden sich in den Unteransprüchen.

Die Einführung des SCR-katalytisch aktivierten Partikelfilters mit passivem Filterregenerationskonzept führt zu Rußabbrand nach der sog. "CRT-Reaktion" = Oxidation der eingelagerten Rußpartikel mit NO₂

| | | |
|---|---|---|
| CRT^{®}-Reaktion: | Cₙ + 2n NO₂ | → n CO₂ + 2n NO |

Diese steht in Konkurrenz zur SCR-Reaktion. Für die SCR-Reaktion gibt es drei Reaktionsmechanismen, die mit unterschiedlichen Reaktionsgeschwindigkeiten (RG) ablaufen:

| | | | |
|---|---|---|---|
| standard SCR: | 4 NO + 4 NH₃ + O₂ → | 4 N₂ + 6 H₂O | mittlere RG |
| fast SCR: | NO + NO₂ + 2 NH₃ → | 2 N₂ + 3 H₂O | hohe RG |
| slow SCR: | 6 NO₂ + 8 NH₃ | 2 N₂ + 12 H₂O | niedrige RG |

Um für den Rußabbrand zur passiven Regeneration des Partikelfilters hinreichend viel NO₂ zur Verfügung zu stellen, muss der vorgelagerte DOC in Betriebspunkten bis zu einer Abgastemperatur von 350 - 375°C mehr als 50 % NO₂ im NOₓ zur Verfügung stellen. Der NO₂-Überschuss sollte - wenn die "CRT^{®}-Reaktion" schneller abläuft, als die "slow-SCR"-Reaktion - für den Rußabbrand zur Verfügung stehen, so dass eine passive Partikelfilterregeneration gewährleistet ist.

Bei einer DOC-Betriebstemperatur oberhalb von ca. 300°C verlässt man den kinetisch kontrollierten Bereich. Die mittels Katalysator erzeugbare NO₂-Konzentration im Abgas hängt dann nicht mehr von der Katalysatorleistung, sondern ausschließlich von der Lage des thermodynamischen Gleichgewichts ab. Bei Temperaturen von mehr als 400°C sind NO₂-Konzentrationen von mehr als 50 % im NOₓ nicht mehr erzeugbar:

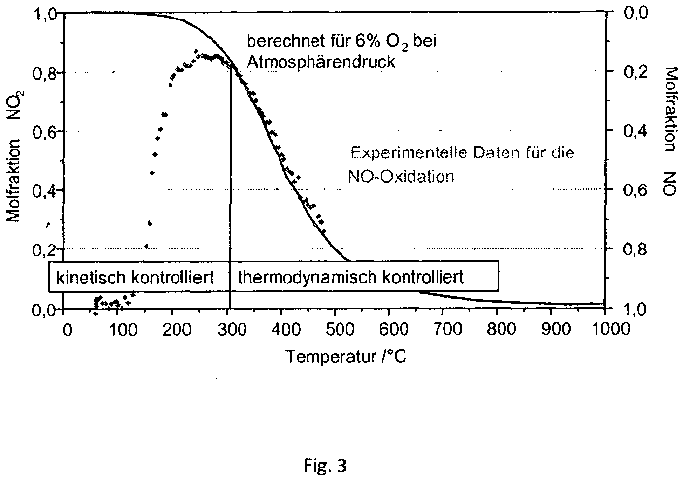

s. Figur 3, Quelle: C. Hagelüken et al., "Autoabgaskatalysatoren", 2. Auflage, expert Verlag 2005, S. 92.

Bereits ab 250°C setzt die Rußoxidation mit NO₂ ein. Ab 300°C ist eine passive Regeneration des Partikelfilters mit hoher Betriebssicherheit möglich (Quelle: C. Hagelüken et al, "Autoabgaskatalysatoren, 2. Aufl., expert Verlag 2005, S. 102). Unter diesen Randbedingungen ist, bei Bereitstellung hinreichend hoher NO₂-Konzentrationen, die Konkurrenz zwischen SCR-Reaktion und "CRT^{®}-Reaktion" handhabbar.

Sollte die durch den DOC bereitstellbare Menge an NO₂ nicht ausreichend sein, um die Konkurrenzsituation zwischen SCR-Reaktion einerseits und Rußregeneration andererseits produktiv aufzulösen, besteht die Möglichkeit, die Entstickungseffizienz des SCR-katalytisch aktivierten Filters durch Begrenzung der einzudosierenden Reduktionsmittelmenge zu limitieren, um eine hinreichende passive Regeneration des Partikelfilters zu gewährleisten. Für diesen Fall ist in einer alternativen Ausgestaltung eine zweite Dosierstelle für Ammoniak vor einem nachgelagerten (zusätzlichen) SCR-Katalysator vorgesehen, um die geforderte Entstickungseffizienz des Gesamtsystems von > 97 % zu gewährleisten.

Durch die Eindosierung von Ammoniak als Reduktionsmittel anstelle von HWL entfällt die Notwendigkeit der Aufarbeitung in der Abgastemperatur. Herausforderung bei der Eindosierung von gasförmigen NH₃ in das Abgas ist die Sicherstellung der Homogenisierung des NH₃/Abgasgemisches auf möglichst kurzen Wegstrecken vor SDPF-/Katalysatoreintritt.

Die Erfindung sowie das technische Umfeld werden nachfolgend anhand der Figuren erläutert. Es ist darauf hinzuweisen, dass die Erfindung nicht auf den Gegenstand der Figuren beschränkt ist. Es zeigt schematisch:

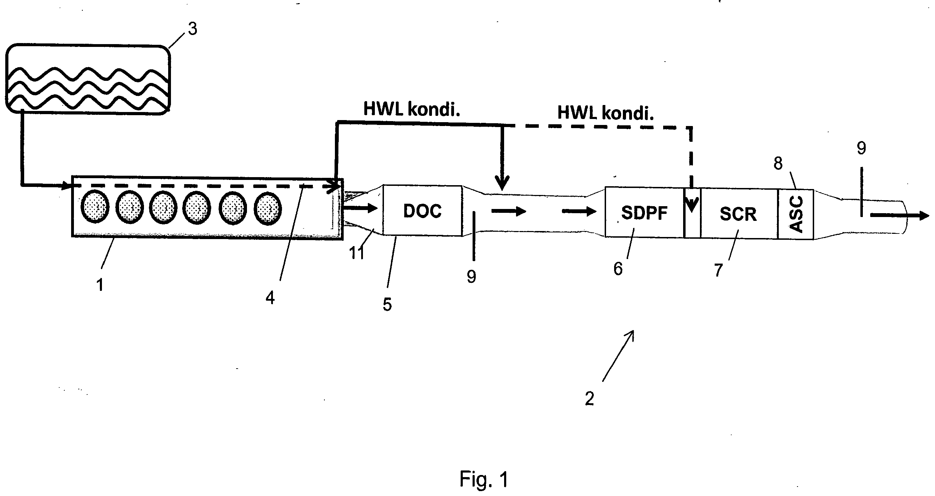

- Figur 1: eine bevorzugte Ausführungsvariante der erfindungsgemäßen Vorrichtung.

Figur 1 zeigt eine Brennkraftmaschine 1 mit einem Abgasstrang 2, einem Harnstoff-Wasser-Lösungs-Tank 3 und einem NH₃-Generator 4. Der NH₃-Generator 4 ist im Wesentlichen im Bereich des Kurbelgehäuses der Brennkraftmaschine 1 angeordnet. Im Abgasstrang 2 in Strömungsrichtung des Abgases ist zwischen DOC 5 und dem SDPF 6 ein NOₓ-Sensor 9 und eine NH₃-Eintragsvorrichtung angeordnet, die von dem NH₃-Generator 4 gespeist wird. Der NH₃-Generator 4 kann auch die NH₃-Eintragsvorrichtung zwischen SDPF 6 und dem SCR 7 mit NH₃ versorgen. In Strömungsrichtung des Abgases befindet sich ein Ammoniak-Schlupf-Katalysator (ASC) 8 hinter dem SCR 7. Am Ende des Abgasstrangs 2 ist ein NOₓ-Sensor 9 angeordnet. In einer alternativen Ausgestaltung ist vorgesehen, dass der NH₃-Generator 4 im Wesentlichen in einem doppelwandigen Abgasrohr 11 angeordnet ist, das zwei NOₓ-Sensoren 9 aufweist, wobei der eine NOₓ-Sensor 9 zwischen DOC 5 und SDPF 6 und der andere hinter dem ASC 8 angeordnet ist.

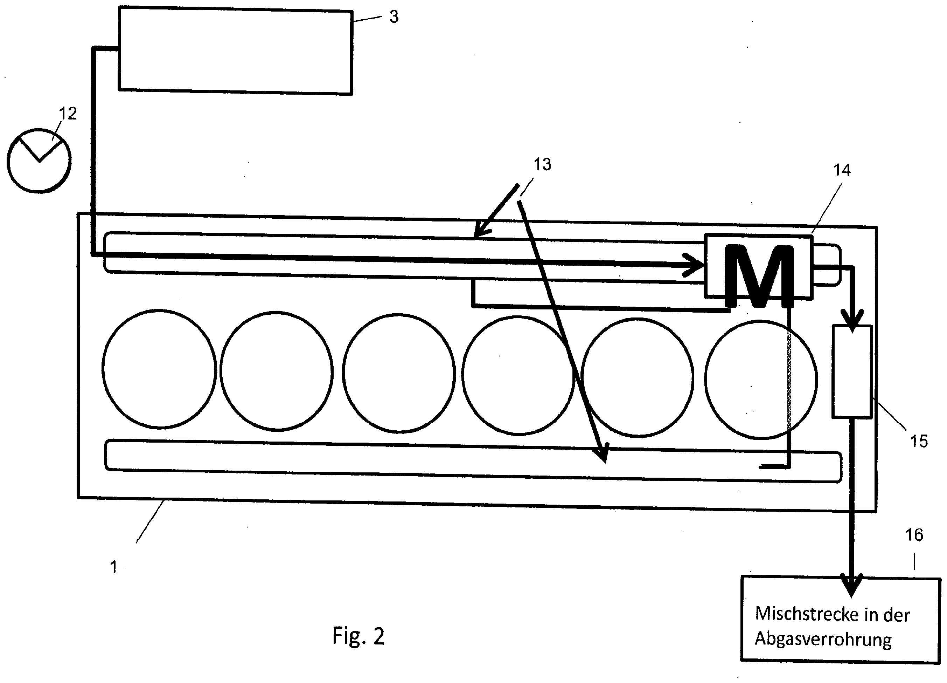

In Figur 2 wird ein Kurbelgehäuse einer Brennkraftmaschine 1 mit im Kühlkreislauf bzw. Wassermantel 13 integrierten HWL-Wärmetauscher 14 gezeigt. Die HWL befindet sich in dem im Bereich der Brennkraftmaschine angeordneten Harnstoff-Wasser-Lösungs-Tank 3. Die HWL wird mittels Flüssigharnförderpumpe 12 in den Bereich des Kühlwasser führenden Bereich des Kurbelgehäuses der Brennkraftmaschine 1 gefördert, in dem sich der HWL-Wärmetauscher 14 befindet und durch den die HWL erwärmt wird. In einer nicht dargestellen alternativen Ausgestaltung ist vorgesehen, dass der HWL-Wärmetauscher 14 im Zylinderkopf der Brennkraftmaschine 1 angeordnet ist. Die erwärmte HWL gelangt mittels der Flüssigharnförderpumpe 12 nach dem Verlassen des HWL-Wärmetauscher 14 in die Dosiereinrichtung 15. Nach dem die HWL die Dosiereinrichtung 15 verlassen hat, gelangt sie in die Mischstrecke in der Abgasverrohrung 16, in der sie weiter erwärmt wird.

### Abkürzungsverzeichnis:

- AdBlue: 32,5 %ige wässrige Harnstofflösung
- ANB: Abgasnachbehandlung
- ASC: Ammoniak Slip Katalysator
- CSF: Partikelfilter mit einer Beschichtung zur Oxidation von Abgaskomponenten
- DOC: Dieseloxidationskatalysator
- DPF: Dieselpartikelfilter
- NH₃: Ammoniak
- NOₓ: Summe der bei der motorischen Verbrennung entstehenden Stickoxide (NO, NO₂, N₂O etc.)
- SCR: Selektive katalytische Reduktion
- SDPF: Dieselpartikelfilter mit einer SCR-aktiven Beschichtung

### Bezugszeichen

- 1: Brennkraftmaschine
- 2: Abgasstrang
- 3: Harnstoff-Wasser-Lösungs-Tank
- 4: NH₃-Generator
- 5: DOC
- 6: SDPF
- 7: SCR
- 8: ASC
- 9: NOₓ-Sensor
- 10: Zylinderkopf
- 11: doppelwandiges Abgasrohr
- 12: Flüssigharnförderpumpe
- 13: Wassermantel
- 14: HWL-Wärmetauscher
- 15: Dosiereinrichtung
- 16: Abgasverrohrung

## Patentansprüche

1. Brennkraftmaschine, umfassend wenigstens einen Abgasstrang mit wenigstens einer Abgasnachbehandlungsvorrichtung, wenigstens einen Harnstoff-Wasser-Lösungs-Tank (3) und einen motornah angeordneten Harnstoff-Wasser-Lösungs-Wärmetauscher (14), **dadurch gekennzeichnet, dass** sich der Harnstoff-Wasser-Lösungs-Wärmetauscher (14) im Kühlwasser führenden Bereich des Kurbelgehäuses der Brennkraftmaschine und/oder im Zylinderkopf befindet.

2. Brennkraftmaschine nach Anspruch 1 oder 2,
**dadurch gekennzeichnet, dass** der Abgasstrang (2) wenigstens einen DOC (5) aufweist.

3. Brennkraftmaschine nach einem oder mehreren der vorher genannten Ansprüche,
**dadurch gekennzeichnet, dass** der Abgasstrang (2) einen SDPF (6) aufweist.

4. Brennkraftmaschine nach einem oder mehreren der vorher genannten Ansprüche,
**dadurch gekennzeichnet, dass** der Abgasstrang (2) wenigstens einen SCR (7) aufweist.

5. Brennkraftmaschine nach einem oder mehreren der vorher genannten Ansprüche,
**dadurch gekennzeichnet, dass** der Abgasstrang (2) wenigstens einen ASC (8) aufweist.

6. Brennkraftmaschine nach einem oder mehreren der vorher genannten Ansprüche,
**dadurch gekennzeichnet, dass** der Abgasstrang (2) wenigstens einen NOₓ-Sensor (9) aufweist.

7. Brennkraftmaschine nach einem oder mehreren der vorher genannten Ansprüche,
**dadurch gekennzeichnet, dass** ein Harnstoff-Wasser-Lösungs-Dosierventil (15) sich direkt nach einem Abgasturbolader befindet.

## Claims

1. Combustion engine comprising at least one exhaust section having at least one exhaust gas aftertreatment device, at least one aqueous urea solution tank (3) and an aqueous urea solution heat exchanger (14) which is arranged close to the engine,
**characterized in that** the aqueous urea solution heat exchanger (14) is situated in the cooling-water-carrying region of the crankcase of the combustion engine and/or in the cylinder head.

2. Combustion engine according to Claim 1,
**characterized in that** the exhaust section (2) has at least one DOC (5).

3. Combustion engine according to one or more of the preceding claims,
**characterized in that** the exhaust section (2) has an SDPF (6).

4. Combustion engine according to one or more of the preceding claims,
**characterized in that** the exhaust section (2) has at least one SCR (7).

5. Combustion engine according to one or more of the preceding claims,
**characterized in that** the exhaust section (2) has at least one ASC (8).

6. Combustion engine according to one or more of the preceding claims,
**characterized in that** the exhaust section (2) has at least one NOₓ sensor (9).

7. Combustion engine according to one or more of the preceding claims,
**characterized in that** an aqueous urea solution metering valve (15) is situated directly after an exhaust turbocharger.

## Revendications

1. Moteur à combustion interne comprenant au moins un parcours pour gaz d'échappement doté d'au moins un ensemble de traitement des gaz d'échappement, d'au moins une cuve (3) à solution aqueuse d'urée et d'un échangeur de chaleur (14) pour la solution aqueuse d'urée disposé à proximité du moteur,
**caractérisé en ce que**
l'échangeur de chaleur (14) pour la solution aqueuse d'urée est situé dans la partie du carter de vilebrequin du moteur à combustion interne qui conduit l'eau de refroidissement et/ou dans la tête du cylindre.

2. Moteur à combustion interne selon la revendication 1, **caractérisé en ce que** le parcours (2) de gaz d'échappement présente au moins un DOC (5).

3. Moteur à combustion interne selon l'une ou plusieurs des revendications précédentes, **caractérisé en ce que** le parcours (2) pour gaz d'échappement présente un SDPF (6).

4. Moteur à combustion interne selon l'une ou plusieurs des revendications précédentes, **caractérisé en ce que** le parcours (2) pour gaz d'échappement présente au moins un SCR (7).

5. Moteur à combustion interne selon l'une ou plusieurs des revendications précédentes, **caractérisé en ce que** le parcours (2) pour gaz d'échappement présente au moins un ASC (8).

6. Moteur à combustion interne selon l'une ou plusieurs des revendications précédentes, **caractérisé en ce que** le parcours (2) pour gaz d'échappement présente un capteur (9) à NOₓ.

7. Moteur à combustion interne selon l'une ou plusieurs des revendications précédentes, **caractérisé en ce qu'**une soupape (15) de dosage de solution aqueuse d'urée est située directement en aval d'un turbocompresseur entraîné par les gaz d'échappement.
